# EUROPÄISCHE PATENTSCHRIFT

(11) **EP 0 787 693 B1**
(45) Veröffentlichungstag und Bekanntmachung des Hinweises auf die Patenterteilung: **12.01.2000**
(21) Anmeldenummer: 96118730.9
(22) Anmeldetag: 22.11.1996
(51) Int. Cl.: C03C 3/091

(54) **Alkalifreies Aluminoborosilicatglas und dessen Verwendung**
Alkali-free aluminoborosilicate glass and its use
Verres aluminoborosilicates exempt de métaux alcalins et leur utilisation

(30) Priorität: 02.02.1996 DE 19603698
(43) Veröffentlichungstag der Anmeldung: 06.08.1997
(73) Patentinhaber: Schott Glas, 55122 Mainz (DE); Carl Zeiss Stiftung Trading as Schott Glaswerke, 55122 Mainz (DE)
(72) Erfinder: Brix, Peter, Dr., 55116 Mainz (DE); Schneider, Klaus, 99510 Apolda (DE); Lautenschläger, Gerhard, Dr., 07743 Jena (DE); Kloss, Thomas, 07743 Jena (DE)

(56) Entgegenhaltungen:
- EP-A- 0 510 544
- WO-A-89/02877
- US-A- 3 496 401
- PATENT ABSTRACTS OF JAPAN vol. 016, no. 479 (C-0992), 6.Oktober 1992 & JP 04 175242 A (ASAHI GLASS CO LTD), 23.Juni 1992,
- PATENT ABSTRACTS OF JAPAN vol. 096, no. 002, 29.Februar 1996 & JP 07 277762 A (HOYA CORP), 24.Oktober 1995,
- PATENT ABSTRACTS OF JAPAN vol. 014, no. 363 (C-0746), 7.August 1990 & JP 02 133334 A (CENTRAL GLASS CO LTD), 22.Mai 1990,

## Beschreibung

Gegenstand der Erfindung ist ein alkalifreies Aluminoborosilicatglas für den Einsatz in der Displaytechnik, welches im Floatverfahren mit guter Qualität herstellbar ist.

Die Anforderungen an ein Glas, welches in der Displaytechnik, z. B. als Frontscheibe für einen flachen Bildschirm, eingesetzt werden soll, sind ausführlich von W. H. Dumbaugh, P. L. Bocko und F. P. Fehlner ("Glases for flat-panel displays" in "High-Performance Glasses", hrsg. von M. Gabe und J. M. Parker, Blackie and Son Limited, Glasgow und London, 1992) beschrieben worden. Die derzeit verfügbaren Gläser für derartige Anwendungen sind auch in dem Artikel "Advanced glass substrates for plat panel displays" von J. C. Lapp, P. L. Bocko und J. W. Nelson, Corning Research 1994 zusammengestellt:

Gläser, die als Substrate in LCDs (Liquid Crystal Displays), AMLCDs (Active Matrix Liquid Displays), TFELDs (Thin-film Electroluminescent Displays) oder PDPs (Plasma Display Panels) eingesetzt werden sollen, müssen eine gute thermische Wechselbeständigkeit und gute chemische Beständigkeiten gegenüber den im Herstellprozeß der Flachbildschirme verwendeten Reagenzien aufweisen sowie in ihrem thermischen Ausdehnungsverhalten an polykristallines Silicium angepaßt sein. Weiterhin sollten diesen Gläser möglichst alkalifrei sein, um eine Vergiftung von integrierten Schaltkreisen, die direkt auf dem Glassubstrat aufgebracht sein können, durch eindiffundierende Alkaliionen zu vermeiden. Herstellungsbedingte Anteile von Natriumoxid können dabei bis zu einem Gehalt von 1 000 ppm im Glas toleriert werden.

Die für die Herstellung von flachen Bildschirmen geeigneten Glasscheiben müssen ein gute Formstabilität bei den im Herstellprozeß auftretenden Temperaturen, einen geringen Schrumpf (Compaction) sowie eine sehr gute Qualität bez. der Abwesenheit von kristallinen Einschlüssen, Knoten und Blasen besitzen.

Notwendige Eigenschaften von Gläsern für Flachdisplayanwendungen sind also:
- ein thermischer Ausdehnungskoeffizient α_{20/300} von ca. 3,7 x 10⁻⁶/K (für die Anpassung an polykristallines Silicium)
- eine Temperatur für die Viskosität bei 10¹³ dPas (= Oberer Kühlpunkt OKP) von über 700 °C (für geringe Compaction)
- gute chemische Beständigkeiten
- eine geringe Entglasungstendenz.

Die bisher genannten Anforderungen werden im wesentlichen von einem kommerziell erhältlichen Glas (V1) erfüllt, das gemäß einer Analyse die folgende ungefähre Zusammensetzung (in Gew.-% auf Oxidbasis) besitzt: SiO₂ 57,7; B₂O₃ 8,4; Al₂O₃ 16,4; MgO 0,8; CaO 4,2; SrO 2,0; BaO 9,5; As₂O₃ 1,0. Dieses Glas wird nach einem speziellen "overflow-fusion"-Vertahren hergestellt, welches die Fertigung von Dünngläsern mit einer hohen Oberflächengüte gewährleistet. Allerdings dürfen die für dieses Verfahren geeigneten Gläser nur eine extrem geringe Kristallisationsneigung zeigen, d. h. die Liquidustemperatur (oberhalb dieser Temperatur lösen sich eventuell gebildete Kristalle wieder auf) muß deutliche unterhalb der Verarbeitungstemperatur V_{A} (Temperatur für die Viskosität bei 10⁴ dPas) liegen. Dies dürfte auch der hauptsächliche Grund für den sehr hohen V_{A}-Wert dieses Glases von > 1 300 °C sein. Je höher jedoch V_{A} ist, desto schneller schreitet die Korrosion der Feuerfestmaterialien voran und desto höher liegen die Primärenergiekosten bei der Glasherstellung aus dem Gemenge.

Ein weiterer Nachteil des genannten Glases V1 ist der hohe Anteil Arsenoxid, welches anscheinend als Läutermittel für die geforderte Blasenfreiheit beim gewählten Herstellungsverfahren notwendig ist.

Abgesehen davon, daß es aufgrund der Toxizität von Arsenoxid sinnvoll ist, die Verwendung dieser Glaskomponente zu vermeiden, führt das Vorhandensein von Arsenoxid dazu, daß solche Gläser nicht auf einer Floatanlage gezogen werden können, da die hier vorliegenden reduzierenden Bedingungen (flüssiges Zinn, reduzierende Schutzgasatmosphäre, i. a. Formiergas) zu Ausscheidungen von metallischem Arsen führen, welche den Gläsern eine ungewünschte Graufärbung verleihen, was sie unbrauchbar macht.

In der Patentschritt US 3,496,401 werden für Halogenlampenkolben Glaszusammensetzungsbereiche (Gew.-% auf Oxidbasis) ähnlich der Zusammensetzung des Glases V1 angegeben: SiO₂ 55 - 70; B₂O₃ 0 - 10; Al₂O₃ 13 - 25; Erdalkalioxide 10 - 25. Es werden jedoch keine Angaben über die Läuterung gemacht. Die thermischen Dehnungen dieser Gläser sind niedrig, die Temperaturen für die Viskosität von 10¹³ dPas hoch. Ihre chemische Beständigkeit wird nicht beschrieben.

Die japanische Offenlegungsschrift JP 2-133 334 beschreibt alkalifreie Gläser für elektronische Komponenten, die gute Wärmebeständigkeit, chemische Beständigkeit und optische Homogenität besitzen und folgende Zusammensetzungsbereiche aufweisen (Gew.-% auf Oxidbasis): SiO₂ 54 - 60; B₂O₃ 6 - 10; Al₂O₃ 10-15; MgO 0 - 2; CaO 8 - 15; BaO 4 - 10; ZnO 1 - 6; TiO₂ und/oder ZrO₂ 0,3 - 4.

Die Aufgabe der vorliegenden Erfindung ist es, ein transparentes Glas für den Einsatz in der Displaystechnik zu finden, das einen thermischen Ausdehnungskoeffizienten α_{20/ 300} von ca. 3,7 x 10⁻⁶/K, eine Temperatur, bei der das Glas die Viskosität von 10¹³ dPas besitzt, von über 700 °C, eine Verarbeitungstemperatur V_{A} von weniger als 1 220 °C und eine sehr gute chemische Beständigkeit aufweist und im wesentlichen frei von Alkalioxiden ist. Weiterhin soll es frei von leicht reduzierbaren Bestandteilen und damit auf einer Floatanlage herstellbar sein.

Diese Aufgabe wird durch das im Patentanspruch 1 beschriebene Glas gelöst.

Das Glas enthält 52 bis 62 Gew.-% SiO₂. Bei höheren Anteilen nimmt V_{A} zu hohe Werte an, bei geringeren Anteilen verschlechtert sich die gute hydrolytische Beständigkeit. Bevorzugt wird der Bereich von 55 bis 60 Gew.-%.

Das Al₂O₃ -Gehalt liegt zwischen 12 und 20 Gew.-%. Auch hier steigt bei höheren Anteilen V_{A} an; bei zu niedrigeren Gehalten treten Kristallisationserscheinungen auf. Bevorzugt wird der Bereich von 15 bis 18 Gew.-%.

Das Glas enthält zur Erzielung der gewünschten guten chemischen Beständigkeit 4 - 14 Gew.-% B₂O₃, was in diesem Bereich außerdem als Flußmittel wirkt und die Schmelzbarkeit der Gläser in üblichen Aggregaten gewährleistet. Bevortugt wird der Bereich von 5 bis 12 Gew.-%. In einer besonders bevorzugten Ausführungsform der Erfindung liegen die Komponenten Al₂O₃ und B₂O₃ in einem Gewichtsverhältnis von Al₂O₃/B₂O₃ ≥ 3 vor.

Die Erdalkalioxide sowie ZrO₂ und ZnO heben, wie erwünscht, den Oberen Kühlpunkt OKP an. Daher enthält das Glas 4 bis 11 Gew.-%. CaO (bevorzugt 6 - 10 Gew.-%), 0 - 8 Gew.-% MgO (bevorzugt 0 - 6 Gew.-%) und 0 - 2 Gew.-% BaO (bevorzugt 0 - 1 Gew.-%). Dieser im Vergleich zum Glas V1 geringe Bariumoxid-Anteil begünstigt die gewünschte geringe Dichte der Gläser. Weitere Vorteile dieses niedrigen BaO-Gehalts werden bei der Diskussion des Läutermittels erwähnt.

Ferner enthält das erfindungsgemäße Glas 2 bis 8 Gew.-% ZnO (bevorzugt 2 - 6 Gew.-%) und 0 - 2 Gew.-% ZrO₂. Aufgrund ihrer Schwerlöslichkeit ist der maximale Anteil der letztgenannten Komponente im Glassystem sehr begrenzt.

In einer besonders vorteilhatten Ausführungsform der Erfindung werden die beiden Komponenten MgO und CaO über Dolomit eingebracht, was die Logistik der Gemengezubereitung vereinfacht. Mit dem dadurch gegebenen Mol-Verhältnis von 1 : 1 beträgt das Gewichtsverhältnis CaO/MgO 1,4.

Das Glas kann zusätzlich noch bis zu 2 Gew.-% SnO₂ enthalten. Bevorzugt ist ein Gehalt von 0,5 bis 2,0 Gew.-%, wobei der Bereich zwischen 0,5 bis 1,0 Gew.-% besonders günstig ist.

Aus dem schon oben erwähnten Grund (Reduzierung zu elementarem Arsen) kann für die Läuterung von Gläsern, die nach dem eigentlichen Schmelzvorgang auf einer Floatanlage zu Scheiben gezogen werden, kein Arsenoxid verwendet werden. Gleiches gilt für das sonst häufig alternativ verwendete Antimonoxid.

Ein anderes gängiges Läutermittel stellt Kochsalz dar, welches in alkalioxidhaltigen Schmelzen häufig eingesetzt wird und durch seine Sublimation ab ca. 1 410 °C zur Läuterung beiträgt, wobei ein Teil des eingesetzten Natriumchlorids sich im Glas in Form von Natriumoxid wiederfindet; da Displaygläser jedoch möglichst alkaliarm sein sollen, ist die Verwendung dieses Läutermittels hier ebenfalls nicht möglich.

Weiter verbleiben als geeignete Läutermittel noch die Erdalkalichloride, von denen sich besonders das Bariumchlorid als wirkungsvoll erwiesen hat, da es ein ähnliches Läuterpotential wie Kochsalz aufweist. Die um ca. 150 °C höhere Sublimationstemperatur erfordert allerdings auch entsprechend höhere Schmelztemperaturen. Ein weiterer Nachteil dieser Komponente ist die erhebliche Toxizität aller löslichen Bariumverbindungen, was aufwendige Vorsorgemaßnahmen im Gemengehaus und bei der Heißverarbeitung zur Einhaltung der MAK-Werte bei Anwendung der Bariumchloridläuterung notwendig macht.

### Beispiele:

Tabelle 1 zeigt zwei erfindungsgemäße Gläser mit ihren Zusammensetzungen und ihren erfindungswesentlichen Eigenschaften.

Die Gläser wurden aus herkömmlichen Rohstoffen bei 1 620 °C erschmolzen. Zur Läuterung wurde die Schmelze zweieinhalb Stunden lang bei 1 600 °C gehalten.

**Tabelle 1**

| Glaszusammensetzung (in Gew.-% auf Oxidbasis) und wesentliche Eigenschaften der Gläser | | |
|---|---|---|
| | Beispiel 1 | Beispiel 2 |
| SiO₂ | 57,00 | 59,40 |
| B₂O₃ | 5,00 | 5,00 |
| Al₂O₃ | 18,00 | 15,00 |
| MgO | 5,80 | 5,10 |
| CaO | 6,60 | 7,10 |
| BaO | 1,00 | 1,00 |
| ZnO | 3,60 | 5,40 |
| ZrO₂ | 2,00 | 1,00 |
| SnO₂ | 1,00 | 1,00 |
| As₂O₃ | | |
| α_{20/300}¹⁾ [10⁻⁶] | 3,68 | 3,72 |
| Tg²⁾ [°C] | 725 | 706 |
| OKP³⁾ [°C] | 732 | 719 |
| EW⁴⁾ [°C] | 927 | 916 |
| V_{A}⁵⁾ [°C] | 1218 | 1216 |
| Dichte [10³kg/m³] | 2,603 | 2,597 |
| Compaction⁶⁾ [ppm] | | -6 |
| Hydrolytische Beständigkeit nach ISO 719 [µg Na₂O/g] | 12 | 13 |
| H₂O⁷⁾ [mg/cm²] | | 0,02 |
| 5 % HCl⁸⁾ [mg/cm²] | | 0,16 |
| 5 % NaOH⁹⁾ [mg/cm²] | | 0,64 |
| 10 % NH₄F:HF¹⁰⁾ [mg/cm²] | | 0,03 |

| | | |
|---|---|---|
| ¹⁾Thermische Dehnung im Temperaturbereich von 20 bis 300 °C | | |
| ²⁾Dilatometrische Glastransformationstemperatur nach DIN 52324 | | |
| ³⁾Oberer Kühlpunkt, Temperatur für die 10¹³ dPas-Viskosität | | |
| ⁴⁾Erweichungspunkt, Temperatur für die 10^{7,6} dPas-Viskosität | | |
| ⁵⁾Verarbeitungstemperatur, Temperatur für die 10⁴ dPas-Viskosität | | |
| ⁶⁾Schrumpf nach Temperung des Glases bei 400 °C für eine Stunde | | |
| ⁷⁾Gewichtsverlust nach Behandlung von polierten Glasplättchen (70 mm x 50 mm x 2 mm) in Wasser für 24 Stunden bei 95 °C | | |
| ⁸⁾Gewichtsverlust nach Behandlung von polierten Glasplättchen (70 mm x 50 mm x 2 mm) in 5 %iger Salzsäure für 24 Stunden bei 95 °C | | |
| ⁹⁾Gewichtsverlust nach Behandlung von polierten Glasplättchen (70 mm x 50 mm x 2 mm) in 5 %iger Natronlauge für 6 Stunden bei 95 °C | | |
| ¹⁰⁾Gewichtsverlust nach Behandlung von polierten Glasplättchen (70 mm x 50 mm x 2 mm) in 10 %iger NH₄F·HF-Lösung für 20 Minuten bei 20 °C | | |

## Patentansprüche

1. Alkalifreies Aluminoborosilicatglas mit einer thermischen Dehnung α_{20/300} von ca. 3,7 x 10⁻⁶/K, einem Oberen Kühlpunkt OKP von über 700 °C, einer Verarbeitungstemperatur V_{A} von weniger als 1 220 °C und sehr guter chemischer Beständigkeit, das in einer Floatanlage herstellbar ist und folgende Zusammensetzung (in Gew.-% auf Oxidbasis) aufweist:
| | |
|---|---|
| SiO₂ | 52 - 62 |
| B₂O₃ | 4 - 14 |
| Al₂O₃ | 12 - 20 |
| MgO | 0 - 8 |
| CaO | 4 - 11 |
| BaO | 0 - 2 |
| ZnO | 2 - 8 |
| ZrO₂ | 0 - 2 |
| SnO₂ | 0 - 2 |

2. Aluminoborosilicatglas nach Anspruch 1 mit einer Zusammensetzung (in Gew.-% auf Oxidbasis) von
| | |
|---|---|
| SiO₂ | 52 - 62 |
| B₂O₃ | 4 - 14 |
| Al₂O₃ | 12 - 20 |
| MgO | 0 - 8 |
| CaO | 4 - 11 |
| BaO | 0 - 2 |
| ZnO | 2 - 8 |
| ZrO₂ | 0 - 2 |
| SnO₂ | 0,5 - 2 |

3. Aluminoborosilicatglas nach Anspruch 1 oder 2 mit einer Zusammensetzung (in Gew.-% auf Oxidbasis) von
| | |
|---|---|
| SiO₂ | 55 - 60 |
| B₂O₃ | 5 - 12 |
| Al₂O₃ | 15 - 18 |
| MgO | 0 - 6 |
| CaO | 6 - 10 |
| BaO | 0 - 1 |
| ZnO | 2 - 6 |
| ZrO₂ | 0 - 2 |
| SnO₂ | 0,5 - 1 |

4. Aluminoborosilicatglas nach wenigstens einem der Ansprüche 1 bis 3 mit einem Gewichtsverhältnis Al₂O₃ : B₂O₃ ≥ 3.

5. Aluminoborosilicatglas nach wenigstens einem der Ansprüche 1 bis 4 mit einem Molverhältnis von CaO : MgO = 1 (= einem Gewichtsverhältnis von gerundet 1,4).

6. Verwendung des Aluminosilicatglases nach wenigstens einem der Ansprüche 1 bis 5 als Substratglas in der Displaytechnik.

## Claims

1. Alkali-free aluminoborosilicate glass which has a thermal expansion α₂₀/₃₀₀ of about 3.7 x 10⁻⁶/K, an annealing point A.P. of above 700°C, a working point V_{A} of below 1220°C and very good chemical resistance and which can be produced in a float plant and has the following composition (in % by weight, based on oxide):
| | |
|---|---|
| SiO₂ | 52 -62 |
| B₂O₃ | 4 - 14 |
| Al₂O₃ | 12 - 20 |
| MgO | 0 - 8 |
| CaO | 4 - 11 |
| BaO | 0 - 2 |
| ZnO | 2 - 8 |
| ZrO₂ | 0 - 2 |
| SnO₂ | 0 - 2 |

2. Aluminoborosilicate glass according to Claim 1, having a composition (in % by weight, based on oxide) of
| | |
|---|---|
| SiO₂ | 52 -62 |
| B₂O₃ | 4 -14 |
| Al₂O₃ | 12 -20 |
| MgO | 0 - 8 |
| CaO | 4 -11 |
| BaO | 0 - 2 |
| ZnO | 2 - 8 |
| ZrO₂ | 0 - 2 |
| SnO₂ | 0.5 - 2 |

3. Aluminoborosilicate glass according to Claim 1 or 2, having a composition (in % by weight, based on oxide) of
| | |
|---|---|
| SiO₂ | 55 -60 |
| B₂O₃ | 5 -12 |
| Al₂O₃ | 15 -18 |
| MgO | 0 - 6 |
| CaO | 6 -10 |
| BaO | 0 - 1 |
| ZnO | 2 - 6 |
| ZrO₂ | 0 - 2 |
| SnO₂ | 0.5 - 1 |

4. Aluminoborosilicate glass according to at least one of Claims 1 to 3, having an Al₂O₃:B₂O₃ weight ratio of ≥ 3.

5. Aluminoborosilicate glass according to at least one of Claims 1 to 4, having a CaO:MgO molar ratio = 1 (= a weight ratio of approximately 1.4).

6. Use of the aluminoborosilicate glass according to at least one of Claims 1 to 5 as substrate glass in display technology.

## Revendications

1. Verre d'aluminoborosilicate exempt d'alcali avec une dilatation thermique α_{20/300} d'environ 3,7 x 10⁻⁶/K, un point de refroidissement supérieur OKP de plus de 700°C, une température de transformation V_{A} de moins de 1220°C et une très bonne résistance chimique, que l'on peut préparer dans un dispositif à verre flotté et présente la composition suivante (en % en poids sur base d'oxyde) :
| | |
|---|---|
| SiO₂ | 52-62 |
| B₂O₃ | 4-14 |
| Al₂O₃ | 12-20 |
| MgO | 0-8 |
| CaO | 4-11 |
| BaO | 0-2 |
| ZnO | 2-8 |
| ZrO₂ | 0-2 |
| SnO₂ | 0-2 |

2. Verre d'aluminoborosilicate suivant la revendication 1, avec une composition (en % en poids sur base d'oxyde) de
| | |
|---|---|
| SiO₂ | 52-62 |
| B₂O₃ | 4-14 |
| Al₂O₃ | 12-20 |
| MgO | 0-8 |
| CaO | 4-11 |
| BaO | 0-2 |
| ZnO | 2-8 |
| ZrO₂ | 0-2 |
| SnO₂ | 0,5-2 |

3. Verre d'aluminoborosilicate suivant la revendication 1 ou 2, avec une composition (en % en poids sur base d'oxyde) de
| | |
|---|---|
| SiO₂ | 55-60 |
| B₂O₃ | 5-12 |
| Al₂O₃ | 15-18 |
| MgO | 0-6 |
| CaO | 6-10 |
| BaO | 0-1 |
| ZnO | 2-6 |
| ZrO₂ | 0-2 |
| SnO₂ | 0,5-1 |

4. Verre d'aluminoborosilicate suivant au moins l'une des revendications 1 à 3, avec un rapport de poids Al₂O₃:B₂O₃ ≥ 3.

5. Verre d'aluminoborosilicate suivant au moins l'une des revendications 1 à 4, avec un rapport molaire CaO:MgO = 1 (= un rapport de poids arrondi à 1,4).

6. Utilisation de verre d'aluminosilicate suivant au moins l'une des revendications 1 à 5, comme verre de base dans la technique d'affichage.
